# EUROPÄISCHE PATENTSCHRIFT

(11) **EP 1 873 001 B1**
(45) Veröffentlichungstag und Bekanntmachung des Hinweises auf die Patenterteilung: **12.12.2012**
(21) Anmeldenummer: 07109848.7
(22) Anmeldetag: 08.06.2007
(51) Int. Cl.: B60K 37/02

(54) **Anzeigeinstrument**
Display instrument
Instrument d'affichage

(30) Priorität: 26.06.2006 DE 102006029219
(43) Veröffentlichungstag der Anmeldung: 02.01.2008
(73) Patentinhaber: ROBERT BOSCH GMBH, 70442 Stuttgart (DE)
(72) Erfinder: Vogt, Thomas, 71640, Ludwigsburg (DE); Gehrig, Andreas, 76275, Ettlingen (DE); Karampatziakis, Kiriakos, 70469, Stuttgart (DE); Apfel, Thomas, 71067, Sindelfingen (DE)

(56) Entgegenhaltungen:
- DE-A1- 4 444 471
- DE-A1- 19 732 156
- DE-C1- 19 737 726

## Beschreibung

### Stand der Technik

Die Erfindung geht aus von einem Anzeigeinstrument nach Gattung des unabhängigen Anspruchs. Aus der DE 197 37 726 C1 ist bereits eine Anzeigevorrichtung für Kraftfahrzeuge bekannt, die eine Deckscheibe aufweist, deren Transmissionsvermögen eingeschränkt ist. Hierdurch wird erreicht, dass Anzeigeelemente innerhalb der Anzeigeeinrichtung für den Fall, dass die Anzeigeelemente nicht hinterleuchtet sind, durch die Deckscheibe hindurch zumindest im Wesentlichen nicht sichtbar sind. Ferner ist es bekannt, an der Deckscheibe einen Polarisationsfilter vorzusehen.

Aus der DE 197 32 156 A1 ist eine zusammengesetzte Anzeigetafel bekannt, bei der eine transparente Elektrolumineszenzanzeigetafel einen Abschnitt eines herkömmlichen Armaturenbretts überdeckt. Um Rückreflexionen des von der Elektrolumineszenzanzeigetafel ausgesendeten Lichtes in Richtung der dahinter befindlichen Anzeigen zu verhindern, ist zwischen den Anzeigen und der Elektrolumineszenzanzeigetafel ein Lichtdämpfungsfilter angeordnet.

Die DE 4 444 471 offenbart ein Anzeige instrument nach dem Oberbegriff des Anspruchs 1.

### Offenbarung der Erfindung

Aufgabe der Erfindung ist die Ablesbarkeit des Anzeigeinstruments zu Verbessern.

Diese Aufgabe wird mit den Merkmalen des Anspruchs 1 gelöst.

Das erfindungsgemäße Anzeigeinstrument mit den Merkmalen des unabhängigen Anspruchs hat demgegenüber den Vorteil, dass eine transparente Scheibe mit verringerter Lichttransmission im Inneren des Anzeigeinstrumentes angeordnet ist. Hierdurch kann die Ablesbarkeit des Anzeigeinstruments verbessert werden, da Reflexionen gegenüber der Verwendung einer transparenten Deckscheibe mit verringerter Lichmansmission weiter verringert werden können. Zudem können innerhalb der Anzeigeeinrichtung weitere Anzeigeinstrumente, insbesondere Skalenaufdrucke, Beschriftungen oder Zeigerinstrumente, vorgesehen sein, die nicht von der Deckscheibe mit verringerter Lichttransmission abgedeckt werden, so dass für diese Anzeigelemente der Beleuchtungsbedarf reduziert werden kann, ohne dass die Ablesbarkeit des Anzeigeinstruments durch eine Zunahme von Strukturen oder Helligkeitsunterschieden verschlechtert wird. Durch die transparente Scheibe mit Mitteln zur Reduzierung der Lichttransmission im Inneren des Anzeigeinstrumentes wird eine dunkle Fläche im Inneren des Anzeigeinstrumentes erreicht, durch die eventuelle Anzeigen nur dann sichtbar sind, wenn eine entsprechende Anzeige für den Fahrer auch erforderlich ist. So ist ein übersichtliches und damit leichtes Ablesen der anzuzeigenden Informationen für den Fahrer möglich.

Durch die in den abhängigen Ansprüchen aufgeführten Maßnahmen sind vorteilhafte Weiterbildungen und Verbesserungen des in dem unabhängigen Anspruch angegebenen Anzeigeinstruments möglich. Besonders vorteilhaft ist es, auf der transparenten Scheibe ein Polfilter aufzubringen. Das Polfilter absorbiert zumindest die Hälfte des auftreffenden, unpolarisierten Lichts. Ein besonders vorteilhafter Effekt kann dann erreicht werden, wenn das Licht von Anzeigeelementen hinter der transparenten Scheibe auf den Polfilter derart abgestimmt ist, dass es das Polfilter durchqueren kann. Besonders vorteilhaft ist dies bei Licht, das von einer Flüssigkristallanzeige abgegeben wird, die selbst über zumindest ein weiteres Polfilter verfügt. Entweder ist dann das von der Flüssigkristallanzeige austretende Licht bereits in der Vorzugsrichtung polarisiert oder ein Polfilter an der Flüssigkristallanzeige kann sogar weggelassen und durch den Polfilter, der auf der transparenten Scheibe aufgebracht oder in diese eingebracht ist, ersetzt werden.

Ferner ist es vorteilhaft, die transparente Scheibe in einer Ebene mit einem Zifferblatt in dem Gehäuse des Anzeigeinstruments anzuordnen. Hierdurch kann ebenfalls der einheitliche Eindruck der Anzeige und damit die Ablesbarkeit verbessert werden.

Ferner ist es vorteilhaft, eine Öffnung in der transparenten Scheibe zur Aufnahme des Zifferblattes bzw. einer Zeigerwelle vorzusehen. Hierdurch ist es möglich, einen Zeiger bzw. ein Zifferblatt in die Anzeige einzubringen, wobei gegebenenfalls für diese Anzeigeelemente eine eigene Beleuchtung vorgesehen sein kann. Das Zifferblatt bzw. der Zeiger sind dann gegebenenfalls auch ablesbar, wenn die transparente Scheibe nicht durch ihre zugeordneten Beleuchtungsmittel hinterleuchtet wird. Vorteilhaft ist es bei der Verwendung eines gesonderten Zifferblattes, den Übergang zwischen dem Zifferblatt und der transparenten Scheibe durch geeignete Mittel wie beispielsweise einen Tubenring zu kaschieren, um den einheitlichen Eindruck der Anzeige zu wahren.

Ferner ist es vorteilhaft, Mittel zur Lichttrennung zwischen der transparenten Scheibe und einer Beleuchtungseinrichtung des Zifferblattes vorzusehen. Hierdurch ist es zunächst möglich, das Zifferblatt und die transparente Scheibe getrennt voneinander zu beleuchten. Weiterhin kann beispielsweise bei einer unterschiedlichen Transmission des Zifferblattes und der transparenten Scheibe durch unterschiedliche Beleuchtungsmittel eine Beleuchtung mit dem Ziel eines einheitlichen Eindrucks von dem Anzeigegerät durch eine gleiche Helligkeit des Zifferblattes und der transparenten Scheibe erreicht werden.

Ferner ist es vorteilhaft, eine Beschriftung bzw. eine Symboldarstellung für ein Kontrollleuchtenfeld in die transparente Scheibe einzubringen. Hierdurch kann auf das Auflegen von Folien oder Ähnlichem zwischen der transparenten Scheibe und dem zugehörigen Beleuchtungsmittel des Kontrollleuchtenfeldes verzichtet werden.

Ferner ist es vorteilhaft, dass das Gehäuse über eine transparente Deckscheibe verfügt, die die transparente Scheibe im Inneren des Gehäuses gegen eine absichtliche bzw. zufällige Berührung oder Verschmutzung schützt. Zudem können in einer besonderen Ausführungsform auf die Deckscheibe weitere Mittel zur Reflexionsverminderung aufgebracht sein.

### Kurze Beschreibung der Zeichnungen

Ausführungsbeispiele der Erfindung sind in den Zeichnungen dargestellt und in der nachfolgenden Beschreibung näher erläutert.

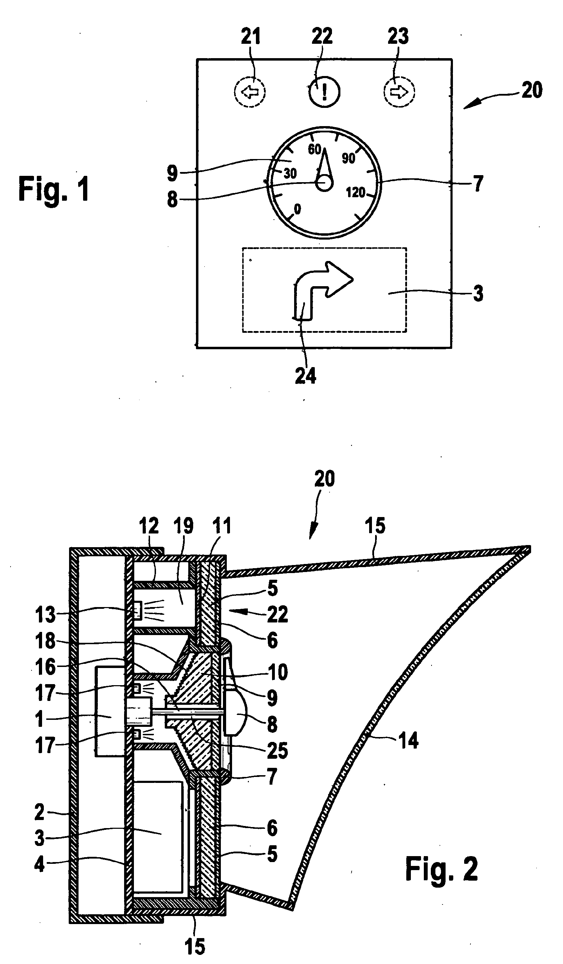

Es zeigen Figur 1 eine Ansicht aus der Sicht eines Fahrers auf ein Ausführungsbeispiel eines erfindungsgemäßen Anzeigeinstruments, Figur 2 eine Seitenansicht eines Ausführungsbeispiels eines erfindungsgemäßen Anzeigeinstruments.

### Ausführungsformen der Erfindung

In der Figur 1 ist ein Anzeigeinstrument 20 gezeigt, das zur Information eines Bedieners einer Maschine, insbesondere eines Fahrzeugs, eingesetzt wird. Die vorliegende Erfindung ist im Folgenden am Beispiel eines Anzeigeinstruments für ein Kraftfahrzeug erläutert. Das Anzeigeinstrument 20 ist hierbei in der Instrumententafel eines Kraftfahrzeugs insbesondere im Blickbereich des Fahrers angeordnet. Das erfindungsgemäße Anzeigeinstrument 20 weist einen Zeiger 8 auf, der einen Messwert durch eine Positionierung gegenüber einem Zifferblatt 9 anzeigt. Diese Anzeige dient beispielsweise der Darstellung einer aktuellen Fahrzeuggeschwindigkeit. Auf dem Zifferblatt 9 ist hierzu ein Aufdruck von Geschwindigkeitswerten vorgesehen. Dieser Aufdruck kann insbesondere derart ausgestaltet werden, dass die Ziffern eine höhere Lichttransmission als der sie umgebende Bereich des Zifferblattes 9 aufweisen. Somit erscheinen die Ziffern bei einer Hinterleuchtung hell gegenüber dem übrigen Zifferblatt. Ferner weist das Anzeigeinstrument 20 eine Bildschirmanzeige 3 auf, die insbesondere als eine Flüssigkristallanzeige ausgeführt ist. Die Bildschirmanzeige kann ferner beispielsweise auch als eine OLED-Anzeige ausgeführt sein. Die Bildschirmanzeige 3 dient insbesondere dazu, vielgestaltige, variable und bevorzugt auch farbige Bildinformationen auszugeben. In dem in der Figur 1 gezeigten Ausführungsbeispiel ist ein Richtungspfeil 24 dargestellt, der als ein Abbiegehinweis einer in der Figur 1 nicht gezeigten Navigationseinrichtung dient. Ferner können in der Bildschirmanzeige 3 aber auch beliebige Warnsymbole oder auch ein mit einer Kamera erfasstes Bild einer Fahrzeugumgebung dargestellt werden.

Ferner weist das Anzeigeinstrument Kontrollleuchtenfelder 21, 22, 23 auf. In dem hier gezeigten Ausführungsbeispiel ist nur das mittlere Kontrollleuchtenfeld 22 sichtbar geschaltet, das ein Warnsymbol darstellt. Die Felder 21, 23 beziehen sich auf eine Fahrtrichtungsanzeige und sind in einem inaktiven Zustand für einen Betrachter des Anzeigeinstruments 20 nicht sichtbar. Dies ist in der Figur 1 durch einen gestrichelten Rand angedeutet. Der Bereich der Kontrollleuchten 21, 23 erscheint für einen Betrachter in diesem Fall entsprechend ihrer Umgebung dunkel. Bei einem normalen Betrachten des Anzeigeinstruments 20 durch den Fahrer können weder Umrisse, noch die in den Kontrollleuchtenfeldern 21, 23 dargestellten Symbole erkannt werden. Ebenfalls ist die Bildschirmanzeige 3 in einem inaktiven Zustand für einen Fahrer nicht sichtbar. In einer ersten Ausführungsform kann die gesamte Anzeigefläche in einem aktiven Zustand stets mit einer Hintergrundfarbe angesteuert werden, so dass sich die Anzeigefläche von ihrer Umgebung innerhalb des Anzeigeinstrumentes abhebt. In einer besonderen Ausführung können jedoch Bildelemente außerhalb eines darzustellenden Symbols selbst bei einem aktiven Zustand der Bildschirmanzeige 3 derart angesteuert werden, dass sie für einen Betrachter im Wesentlichen nicht erkennbar sind. So kann beispielsweise der Pfeil 24 hell angesteuert werden, während die umgebenden Bildpunkte dunkel geschaltet werden. So ist es beispielsweise möglich, den Pfeil 24 in gelb darzustellen und die Umgebung des Pfeils 24 in schwarz darzustellen, um durch die Abdeckung mittels der transparenten Scheibe 5 eine Darstellung der Bildschirmanzeige 3 entsprechend ihrer Umgebung in der Umgebung des Pfeils 24 zu erreichen.

In der Figur 2 ist eine Schnittdarstellung des Anzeigeinstruments 20 in einer Seitenansicht dargestellt. Das Anzeigeinstrument 20 weist ein Gehäuse auf, dass aus einer Rückwand 2, einem Tubenkörper 15 und einer Deckscheibe 14 besteht. Während die Rückwand 2 und der Tubenkörper 15 bevorzugt aus einem intransparenten Kunststoff gefertigt sind, ist die Deckscheibe 14 aus einem transparenten Kunststoff wie beispielsweise PMMA (Polymethylmetacrylat) ausgeführt. Bevorzugt ist die Deckscheibe 14 dabei derart gestaltet, dass sie Licht im sichtbaren Bereich vollständig durchlässt. Das Gehäuse ist dabei derart in eine Instrumententafel eines Fahrzeugs eingelassen, dass das Anzeigeinstrument 20 mit der transparenten Deckscheibe 14 in Blickrichtung des Fahrers liegt. Hierbei ist für den Fahrer meist nur die transparente Deckscheibe 14 sichtbar, während die Rückwand 2 und das Äußere des Tubenkörpers 15 von einer in der Figur 2 nicht dargestellten Aufnahme einer Instrumententafel des Fahrzeugs aufgenommen wird. In dem Gehäuse ist ferner eine Leiterplatte 4 vorgesehen, über die die elektrische Kontaktierung von Anzeigeelementen innerhalb des Anzeigeinstrumentes erfolgt. Auf der Rückseite der Leiterplatte 4 ist ein Schrittmotor zur Ansteuerung eines Zeigers 8 über eine Zeigerwelle 16 vorgesehen. Ferner ist eine Bildschirmanzeige 3 auf der Leiterplatte 4 angeordnet, beispielsweise eine Flüssigkristallanzeige. Außerdem sind auf der Leiterplatte 4 Beleuchtungselemente 13, 17 vorgesehen.

Vorzugsweise parallel zu der Leiterplatte ist eine transparente Scheibe 5 in dem Gehäuse angeordnet. Die transparente Scheibe 5 ist hierbei vorzugsweise parallel zu der Leiterplatte 4 ausgerichtet. Die transparente Scheibe 5 befindet sich hierbei zwischen der Deckscheibe 14 und der Leiterplatte 4. Zwischen der transparenten Scheibe 5 und der Leiterplatte 4 ist ein Trageelement 12 ausgebildet, das vorzugsweise aus einem Kunststoffmaterial ausgebildet ist. Das Trageelement 12 ist vorzugsweise weiß eingefärbt, damit es als Reflektor dienen kann. Das Trageelement 12 trägt die transparente Scheibe 5. Die transparente Scheibe 5 besteht aus einem eingefärbten, lichttransparenten Kunststoff. Die Einfärbung erfolgt bevorzugt durch graue bzw. schwarze Farbpartikel. Die transparente Scheibe 5 ist bevorzugt in einem Spritzgussverfahren gefertigt, bei dem die Farbpartikel bereits in das Kunststoffmaterial, beispielsweise ebenfalls PMMA, eingebracht wurde. Vorzugsweise werden hierbei derartige Farbpartikel verwendet, bei denen es im sichtbaren Wellenlängenbereich nicht zu einer Farbortverschiebung kommt. Der Transmissionsgrad der transparenten Scheibe 5 beträgt zwischen 20 % und 60 % ; Vorzugsweise wird ein Transmissionsgrad von etwa 30 % gewählt. Statt einer grauen Einfärbung ist es auch möglich, die transparente Scheibe 5 beispielsweise in dunklen Grün-, Braun- oder Blautönen einzufärben.

Auf die transparente Scheibe 5 ist in dem hier gezeigten Ausführungsbeispiel auf der der Leiterplatte 4 abgewandten Seite ein Polarisationsfilter 6 auflaminiert. Hierbei kann ein Polarisationsfilter verwendet werden, das üblicherweise in Flüssigkristallanzeigen eingesetzt wird. Das Polarisationsfilter 6 hat ein Transmissionsgrad von etwa 45% bis 55% für diffuses Licht und einen Transmissionsgrad von etwa 80% bis 85% für polarisiertes Licht, das in der Vorzugsrichtung des Polarisationsfilters polarisiert ist. Somit ergibt sich für das Licht, das die transparente Scheibe 5 und das Polarisationsfilter 6 durchquert, ein effektiver, gesamter Transmissionsgrad von 15% für nicht polarisiertes und von 25% von für in der Vorzugsrichtung des Polfilters 6 polarisiertes Licht, bei einem Transmissionsgrad der transparenten Scheibe 5 von etwa 30%.

Die transparente Scheibe kann mit einer glänzenden, aber auch mit einer matten Oberfläche ausgeführt werden. Bei einer matten Ausgestaltung können Reflexionen auf der Oberfläche vermindert werden. In einer besonderen Ausführungsform kann entweder auf die Oberfläche der transparenten Scheibe 5, die der Deckscheibe 14 zuweist, oder auf die Oberfläche des Polfilters eine Antireflexionsschicht aufgebracht werden. Die Antireflexionsschicht sollte möglichst den Reflexionsgrad derart senken, dass ein Reflexionskoeffizient von weniger als 0,5% erreicht wird. Durch das Aufbringen beispielsweise von Interferenzfiltern kann eine an sich bekannte Reflexionsverminderung erfolgen. Entsprechende Entspiegelungsschichten können beispielsweise durch ein PVD-Verfahren (Physical Vapor Deposition), wie beispielsweise Aufsputtern oder Aufdampfen, oder durch ein CVD-Verfahren (Chemical Vapor Deposition) auf die transparente Scheibe 5 aufgebracht werden. Ferner ist es möglich, z.B. Mottenaugenstrukturen auf die Oberfläche der transparenten Scheibe 5 aufzubringen.

In dem hier gezeigten Ausführungsbeispiel ist die transparente Scheibe 5 als eine ebene Fläche dargestellt. In einer weiteren Ausführungsform kann die transparente Scheibe 5 beispielsweise in einem Spritzgussverfahren auch als eine gekrümmte Oberfläche hergestellt werden. Die Position der Leiterplatte kann hierbei beispielsweise durch einzelne Leiterplattenelemente, die durch flexible Leiterstücke miteinander verbunden sind, an diese gekrümmte Struktur angepasst werden. In einer weiteren Ausführungsform kann die transparente Scheibe auch durch ein Laserschneideverfahren erzeugt werden. In einer weiteren Ausführungsform kann die transparente Scheibe 5 auch aus einer eingefärbten Kunststofffolie, beispielsweise aus Polyethylen oder Polycarbonat, gebildet werden.

In der hier gezeigten Ausführungsform erstreckt sich die transparente Scheibe über die Bildschirmanzeige 3, über die Kontrollleuchtenfelder 21, 22, 23 sowie über den gesamten Hintergrund des Anzeigeinstrumentes. In einer weiteren Ausführungsform ist es jedoch auch möglich, dass nur Teile des Anzeigeinstrumentes von der transparenten Scheibe überdeckt werden. Hierbei soll jedoch in erfindungsgemäßer Weise ein Zusammenhang zwischen einer Bildschirmanzeige und wenigstens einem weiteren Kontrollleuchtenfeld derart entstehen, dass beide Felder gemeinsam von der transparenten Scheibe mit reduzierter Lichttransmission abgedeckt werden.

Das Trageelement 12 ist derart ausgeführt, dass es entsprechende Lichtschächte für die Anzeigeelemente des Anzeigeinstruments 20 ausbildet. So ist beispielsweise ein Lichtschacht vorgesehen, bei dem eine Lichtquelle 13 zur Beleuchtung des mittleren Kontrollleuchtenfeldes 22 in dem Lichtschacht angeordnet ist. Die Lichtquelle 13 ist hierbei bevorzugt als eine Leuchtdiode ausgebildet. Das Tragelement 12 ist dabei derart ausgebildet, dass es einen zylinderförmigen Hohlraum 19 ausbildet, in den das Licht der Lichtquelle 13 eingestrahlt wird. Ist die Lichtquelle 13 inaktiv, erscheint die transparente Scheibe 5 im Bereich des Kontrollleuchtenfeldes 22 als gleichmäßige, dunkle Fläche. Wird die Lichtquelle 13 aktiviert, so durchstrahlt das von der Lichtquelle 13 ausgestrahlte Licht zunächst eine Symbolscheibe 11, die zwischen der Lichtquelle 13 und der transparenten Scheibe vorgesehen ist und bevorzugt entweder auf die transparente Scheibe 5 aufgelegt oder auflaminiert ist. In einer besonderen Ausführungsform kann ein Symbol auch auf die transparente Scheibe 5 unmittelbar auf der der Lichtquelle 13 zugewiesenen Seite aufgedruckt sein. Das Licht durchstrahlt nun die Symbolscheibe 11 und die transparente Scheibe 5 sowie das Polarisationsfilter 6, wobei das von der Lichtquelle 13 abgestrahlte Licht insbesondere unpolarisiert ist, so dass dieses Licht nun für einen Betrachter sichtbar ist und damit das Kontrollleuchtenfeld 22 in dem Anzeigeinstrument 20 erscheint. Entsprechende Beleuchtungsmittel sind für die benachbarten Kontrollleuchtenfelder 21, 23 vorgesehen, die in der Figur 2 nicht gezeigt sind. Die Farbe der Lichtquelle 13 kann entweder an die gewünschte Farbe angepasst werden bzw. es wird eine weiße Lichtquelle verwendet, wobei ein Farbeindruck in diesem Fall durch ein geeignetes Symbolfeld, das in diesem Fall vorzugsweise farbig ausgeführt ist, entsteht. In einer weiteren Ausführungsform können eine Symbolscheibe 11 und der Polarisationsfilter auch hinsichtlich ihrer Anordnung auf der transparenten Scheibe 5 ausgetauscht werden.

Auf der Leiterplatte 4 ist ferner die Bildschirmanzeige 3 angeordnet, die vorzugsweise als eine Flüssigkristallanzeige ausgeführt ist. Eine elektronische Ansteuerung der Bildschirmanzeige 3 sowie der übrigen Anzeigeelemente ist in der Figur 2 nicht dargestellt, erfolgt aber vorzugsweise über auf der Leiterplatte 4 angeordnete Schaltkreise. Auch das von der Bildschirmanzeige 3 ausgestrahlte Licht durchquert die transparente Scheibe 5 sowie das Polfilter 6. Das Polfilter 6 ist dabei in einer ersten Ausführungsform der Erfindung an einer Ausrichtung eines Analysators einer als Flüssigkristallanzeige ausgeführten Bildschirmanzeige 3 angepasst. In einer weiteren Ausführungsform kann auch auf den Analysator verzichtet werden, wobei das Polfilter 6 die Aufgabe des Analysators übernimmt. In einer weiteren Ausführungsform kann insbesondere für den Fall, dass die Bildschirmanzeige 3 keine auf einem Polarisationseffekt beruhende Bilderzeugung aufweist auch auf die Verwendung eines Polarisators 6 verzichtet werden.

In der hier gezeigten Ausführungsform weist die transparente Scheibe 5 eine kreisförmige Öffnung auf, in die das Trageelement 12 eingreift. Das Trageelement 12 umgibt einen kreisförmig ausgeführten Lichtleiter 10. Auf die der Leiterplatte 4 abgewandte Seite des Lichtleiters 10 ist ein Zifferblatt 9 aufgelegt. Das Zifferblatt 9 ist bevorzugt aus einem dunklen Kunststoffmaterial ausgeführt, wobei helle Bereiche zur Darstellung der Ziffern in das Zifferblatt 9 eingelassen sind. Das Zifferblatt befindet sich bevorzugt in einer Ebene mit der Oberfläche der transparenten Scheibe 5 oder, je nach Ausführung, mit der Oberfläche des Polarisationsfilters 6. Der Lichtleiter 10 weist eine Öffnung 25 auf, durch die eine Zeigerwelle 16 von dem Schrittmotor 1 zu dem Zeiger 8 hindurchläuft. Auf der Leiterplatte 4 sind Lichtquellen 17 vorgesehen, insbesondere Leuchtdioden, die Licht in Richtung des Lichtleiters 10 bzw. des Zeigers 8 einstrahlen. Auf der der Leiterplatte 4 zugewiesenen Seite des Lichtleiters 10 sind Lichteinkoppelstrukturen 18 vorgesehen, insbesondere Mikroprismenanordnungen oder Aufrauungen des Lichtleiters 10. Das von den Lichtquellen 17 abgestrahlte Licht wird mittels des Lichtleiters 10 in Richtung des Zeigers 8 und des Zifferblatts 9 umgelenkt. Ein Übergangsbereich zwischen dem Zifferblatt 9 und der Oberfläche der transparenten Scheibe 5 bzw. des Polarisationsfilters 6 wird hierbei in einer bevorzugten Ausführungsform durch einen Ring 7 kaschiert, der insbesondere diejenigen Bereiche des Tragelementes 12 abdeckt, die ansonsten zwischen dem Zifferblatt 9 und der transparenten Scheibe 5 sichtbar wären. Die Einfärbung des Zifferblatts 9, bis auf die Zifferndarstellungen, und die transparente Scheibe 5 in unbeleuchtetem Zustand weisen hierbei bevorzugt eine derartige Färbung auf, das für einen Betrachter ein gleicher Farbeindruck für beide Flächen entsteht. Bevorzugt ist auch der Abdeckring 7 derart ausgeführt, dass kein Farbunterschied zwischen dem Abdeckring und seiner Umgebung ausgenommen der Skalenbeschriftung und des Skalenaufdrucks des Zifferblattes 9 besteht. Das Trageelement 12 ist hierbei derart ausgeführt, dass ein Austreten von Licht aus dem Bereich der Lichtquellen 17 und des Lichtleiters 10 in Richtung der transparenten Platte verhindert wird. Das von den Lichtquellen 17 erzeugte Licht kann nur durch das Zifferblatt 9 hindurch bzw. in Richtung des Zeigers 8 austreten, so dass das Zifferblatt 9 und der Zeiger 8 beleuchtet werden.

In einer weiteren erfindungsgemäßen Ausführungsform kann ein Zifferblatt auch auf die transparente Scheibe 5 mit aufgebracht werden, so dass lediglich der Zeiger 8 von entsprechenden Lichtquellen 17 beleuchtet wird, wobei der Zeiger in diesem Fall auch über Bereiche der transparenten Scheibe 5 geführt wird. In einer weiteren Ausführungsform ist auch eine Anzeige möglich, bei der auf Zeigerinstrumente gänzlich verzichtet wird und die transparente Scheibe 5 den Anzeigenhintergrund in seiner Gesamtheit darstellt, ohne entsprechende Öffnungen für ein Zeigerinstrument vorzusehen.

## Patentansprüche

1. Anzeigeinstrument mit einem Gehäuse (2, 14, 15) mit einer transparenten Deckscheibe (14), mit wenigstens einer Bildschinnanzeige (3) und mit wenigstens einer Kontrollleuchte (13), wobei die wenigstens eine Bildschirmanzeige (3) und die wenigstens eine Kontrollleuchte (13) durch eine weitere transparente Scheibe (5) in Richtung eines Betrachters abgedeckt werden, wobei die transparente Scheibe (5) über Mittel zur Reduzierung der Lichttransmission durch die transparente Scheibe verfügt, **dadurch gekennzeichnet, dass** die transparente Scheibe (5) aus einem eingefärbten, lichttransparenten Kunststoff besteht, dass der Transmissionsgrad der transparenten Scheibe (5) zwischen 20% und 60% beträgt, dass die transparente Scheibe (5) zwischen der Deckscheibe (14) und einer Leiterplatte (4) in einem Inneren eines Gehäuses (2, 14, 15) des Anzeigeinstruments (20) angeordnet ist und vorzugsweise parallel zu der Leiterplatte (4) ausgerichtet ist.

2. Anzeigeinstrument nach Anspruch 1, **dadurch gekennzeichnet, dass** ein Polfilter (6) in die transparente Scheibe (5) eingebracht ist.

3. Anzeigeinstrument nach einem der vorhergehenden Ansprüche, **dadurch gekennzeichnet, dass** auf dem Polfilter (6) oder auf der transparenten Scheibe (5) Mittel zur Reflexionsverminderung angeordnet sind.

4. Anzeigeinstrument nach einem der vorhergehenden Ansprüche, **dadurch gekennzeichnet, dass** die transparente Scheibe (5) in einer Ebene mit einem Zifferblatt (9) in dem Gehäuse des Anzeigeinstruments (1, 14, 15) angeordnet ist.

5. Anzeigeinstrument nach einem der vorhergehenden Ansprüche, **dadurch gekennzeichnet, dass** die transparente Scheibe (5) eine Öffnung zur Aufnahme einer Zeigerwelle (16) zur Bewegung eines Zeigers (8) auf der dem Betrachter zugewandten Seite der transparenten Scheibe (5) und/oder zur Aufnahme eines Zifferblattes (9, 10) aufweist.

6. Anzeigeinstrument nach Anspruch 5, **gekennzeichnet durch** Mittel (7) zur Abdeckung eines Übergangs zwischen der transparenten Scheibe (5) und dem Zifferblatt (9).

7. Anzeigeinstrument nach einem der Ansprüche 5-6, **dadurch gekennzeichnet, dass** das Anzeigeinstrument Mittel (12) zur Lichttrennung zwischen der transparenten Scheibe (5) und einer Beleuchtungseinrichtung (10, 17) des Zifferblatts (9) aufweist.

8. Anzeigeinstrument nach einem der vorhergehenden Ansprüche, **dadurch gekennzeichnet, dass** die transparente Scheibe (5) eine Beschriftung und/oder eine Symboldarstellung für wenigstens ein Kontrollleuchtenfeld (21, 22, 23) aufweist.

## Claims

1. Display instrument having a housing (2, 14, 15) with a transparent cover plate (14), having at least one screen display (3) and having at least one control light (13), the at least one screen display (3) and the at least one control light (13) being covered in the direction of a viewer by a further transparent plate (5), the transparent plate (5) having means for reducing the optical transmission through the transparent plate, **characterized in that** the transparent plate (5) consists of a coloured, optically transparent plastic, **in that** the transmittance of the transparent plate (5) is between 20% and 60%, and **in that** the transparent plate (5) between the cover plate (14) and a printed circuit board (4) is arranged in an interior of a housing (2, 14, 15) of the display instrument (20) and is preferably aligned parallel to the printed circuit board (4).

2. Display instrument according to Claim 1, **characterized in that** a pole filter (6) is introduced into the transparent plate (5).

3. Display instrument according to one of the preceding claims, **characterized in that** reflection reduction means are arranged on the pole filter (6) or on the transparent plate (5).

4. Display instrument according to one of the preceding claims, **characterized in that** the transparent plate (5) is arranged in a plane with a dial (9) in the housing of the display instrument (1, 14, 15).

5. Display instrument according to one of the preceding claims, **characterized in that** the transparent plate (5) has an opening for accommodating a pointer shaft (16) for moving a pointer (8) on the side, facing the viewer, of the transparent plate (5) and/or for accommodating a dial (9, 10).

6. Display instrument according to Claim 5, **characterized by** means (7) for covering a transition between the transparent plate (5) and the dial (9).

7. Display instrument according to one of Claims 5 and 6, **characterized in that** the display instrument has means (12) for light separation between the transparent plate (5) and an illumination device (10, 17) of the dial (9).

8. Display instrument according to one of the preceding claims, **characterized in that** the transparent plate (5) has an inscription and/or a symbol display for at least one control light array (21, 22, 23).

## Revendications

1. Instrument d'affichage doté d'un carter (2, 14, 15) avec une vitre couvrante (14) transparente, avec au moins un affichage par écran (3) et avec au moins une lampe de contrôle (13), l'au moins un affichage par écran (3) et l'au moins une lampe de contrôle (13) étant recouverts par une vitre transparente (5) supplémentaire en direction d'un observateur, la vitre transparente (5) disposant de moyens de réduction de la transmission de lumière à travers la vitre transparente, **caractérisé en ce que** la vitre transparente (5) se compose d'une matière plastique transparente à la lumière colorée, que le degré de transmission de la vitre transparente (5) se situe entre 20 % et 60 %, que la vitre transparente (5) est disposée entre la vitre couvrante (14) et une plaque conductrice (4) placée à l'intérieur d'un carter (2, 14, 15) de l'instrument d'affichage (20) et est de préférence orientée parallèlement à la plaque conductrice (4).

2. Instrument d'affichage selon la revendication 1, **caractérisé en ce qu'**un filtre polarisé (6) est placé dans la vitre transparente (5).

3. Instrument d'affichage selon l'une quelconque des revendications précédentes, **caractérisé en ce que** des moyens de réduction de la réflexion sont disposés sur le filtre polarisé (6) ou sur la vitre transparente (5) pour en réduire la réflexion.

4. Instrument d'affichage selon l'une quelconque des revendications précédentes, **caractérisé en ce que** la vitre transparente (5) est disposée dans un plan avec un cadran (9) placé dans le carter de l'instrument d'affichage (1, 14, 15).

5. Instrument d'affichage selon l'une quelconque des revendications précédentes, **caractérisé en ce que** la vitre transparente (5) comporte une ouverture permettant de recevoir un axe d'aiguille (16) servant à déplacer une aiguille (8) positionnée sur le côté de la vitre transparente (5) orienté vers l'observateur et/ou permettant de recevoir un cadran (9, 10).

6. Instrument d'affichage selon la revendication 5, **caractérisé par** la présence de moyens (7) permettant de recouvrir une zone de transition présente entre la vitre transparente (5) et le cadran (9).

7. Instrument d'affichage selon l'une quelconque des revendications 5 à 6, **caractérisé en ce que** l'instrument d'affichage comporte des moyens (12) de séparation de la lumière entre la vitre transparente (5) et un dispositif d'éclairage (10, 17) du cadran (9).

8. Instrument d'affichage selon l'une quelconque des revendications précédentes, **caractérisé en ce que** la vitre transparente (5) comporte une inscription et/ou une représentation par symbole d'au moins un champ de lumière de contrôle (21, 22, 23).
